# EUROPEAN PATENT SPECIFICATION

(11) **EP 4 239 312 B1**
(45) Date of publication and mention of the grant of the patent: **11.02.2026**
(21) Application number: 21905847.6
(22) Date of filing: 18.12.2021
(51) Int. Cl.: G01N 1/14, G01N 30/06, G01N 30/20, G01N 30/16, G01N 30/88

(54) **AUTOMATIC MONITORING SYSTEM FOR LIQUID PHASE SYNTHESIS**
AUTOMATISCHES ÜBERWACHUNGSSYSTEM FÜR FLÜSSIGPHASENSYNTHESE
SYSTÈME DE SURVEILLANCE AUTOMATIQUE POUR SYNTHÈSE EN PHASE LIQUIDE

(30) Priority: 19.12.2020 CN 202011509012
(43) Date of publication of application: 06.09.2023
(73) Proprietor: Peking University, Beijing 100871 (CN)
(72) Inventor: YE, Xinshan, Beijing 100871 (CN); YAO, Wenlong, Beijing 100871 (CN); XIONG, Decai, Beijing 100871 (CN)
(74) Representative: FRKelly
(86) International application number: PCT/CN2021/139389
(87) International publication number: WO 2022/127925

(56) References cited:
- CN-A- 101 234 325
- CN-A- 102 445 555
- CN-A- 106 645 618
- CN-A- 108 415 038
- CN-A- 111 060 609
- CN-A- 112 665 920
- CN-U- 204 514 694
- CN-U- 207 941 504
- CN-U- 212 111 285
- US-A1- 2016 077 060
- US-A1- 2016 077 060
- US-A1- 2019 170 706
- US-A1- 2019 366 325

## Description

### CROSS REFERENCE TO RELATED APPLICATION

This patent application claims the priority to Chinese Patent Application No. 202011509012.9, filed with the China National Intellectual Property Administration (CNIPA) on December 19, 2020 and entitled "AUTOMATIC MONITORING SYSTEM FOR SOLUTION-PHASE SYNTHESIS".

### TECHNICAL FIELD

The present disclosure relates to the technical field of experimental apparatuses, in particular to an automatic monitoring system for solution-phase synthesis.

### BACKGROUND

Solution-phase experimental monitoring is an essential means to determine experimental results. In existing solution-phase experimental monitoring, a mixed reaction solution needs to be placed into a monitor, in order to obtain monitoring results through the monitor.

However, during the process of monitoring in the prior art, a reaction solution has to be manually added to the monitor for testing. Besides, monitoring reports generated by the monitor need to be manually collated and checked. As a result, a whole process of the solution-phase experimental monitoring is time-consuming and laborious.

Examples of devices for monitoring solution-phase experimental processes can be found in applications CN111060609A, US2016/077060A1, US2019/366325A1, US2019/170706A1. Examples of reactors used for those processes can be found in CN207941504U, CN101234325A.

In view of this, it is an urgent technical issue in the field to provide a new type automatic monitoring device for solution-phase synthesis, in order to implement automatic monitoring and analysis of the solution-phase synthesis experiments, thus further improving experimental monitoring efficiency and decreasing labor consumption of experimental operation.

### SUMMARY

In order to solve the above problems in the prior art, the present disclosure provides an automatic monitoring system for solution-phase synthesis.

To achieve the above objects, the present disclosure provides a technical solution as follows:
An automatic monitoring system for solution-phase synthesis includes a new type reactor, a sampling module, a power module, a monitoring analysis module and an upper computer;
wherein the sampling module is connected to a pipe of the power module, the power module is connected to a pipe of the monitoring analysis module, and the sampling module, the power module and the monitoring analysis module are all electrically connected to the upper computer; and
the sampling module is configured to suck a reaction solution contained in the new type reactor, the power module is configured to provide a suction force for the sampling module according to a suction instruction from the upper computer, and inject the reaction solution sucked into the monitoring analysis module, the monitoring analysis module is configured to generate a monitoring report according to the reaction solution, and then transmit the monitoring report to the upper computer, and the upper computer is configured to generate an analysis result according to the monitoring report.

The new type reactor includes a bottle mouth, a bottle body, a sample intake, an air outlet, a sampling port, a cyclic liquid outlet and a cyclic liquid inlet;
a set angle is formed between the sample intake and the bottle body, and the air outlet and the sample intake are symmetrically arranged with a center line of the bottle mouth as a center;
the bottle body sequentially includes a reaction layer, a temperature cycle layer and a vacuum layer from inside to outside, and a bottom of the reaction layer has an arc-shaped structure;
the sampling port is communicated with the reaction layer; and
the cyclic liquid outlet and the cyclic liquid inlet are both communicated with the temperature cycle layer, and the cyclic liquid outlet and the cyclic liquid inlet are diagonally arranged.

Preferably, the sampling module includes a stainless steel needle, a slide rail and a turntable;
wherein the stainless steel needle is connected to the power module through a first tube; the first tube is arranged on the slide rail, and a set angle is formed between the slide rail and a horizontal line; the stainless steel needle is fixedly arranged at one end of the slide rail, and the other end of the slide rail is a free end; the slide rail is configured to drive the stainless steel needle to slide, and the stainless steel needle is configured to be put into the new type reactor to suck the reaction solution therein; and the slide rail is fixedly arranged on the turntable, and the turntable and the slide rail are both electrically connected to the upper computer.

Preferably, the power module includes a power pump, and the power pump is a syringe pump or a plunger pump; and
the power pump is connected to each of a pipe of the sampling module and the pipe of the monitoring analysis module.

Preferably, the monitoring analysis module is a high performance liquid chromatograph.

Preferably, the automatic monitoring system for solution-phase synthesis further includes a cleaning module;
where the cleaning module is connected to each of a pipe of the sampling module and the pipe of the power module.

Preferably, the cleaning module includes a first liquid container, a second liquid container and a solenoid valve; and
the stainless steel needle sucks a cleansing solution in the first liquid container, and the second liquid container, the power module and the monitoring analysis module are each connected to a pipe of the solenoid valve.

Preferably, the cleansing solution is an organic solvent.

According to detailed embodiments provided by the present disclosure, the present disclosure discloses the following technical effects:
according to the automatic monitoring system for solution-phase synthesis provided by the present disclosure, the sampling module, the power module, the monitoring analysis module and the upper computer are arranged, such that automatic sampling, monitoring and report analysis of the reaction solution can be implemented, thereby improving experimental monitoring efficiency and reducing labor cost of experimental operation.

### BRIEF DESCRIPTION OF THE DRAWINGS

To describe technical solutions in embodiments of the present disclosure or in the prior art more clearly, the accompanying drawings required for the embodiments are briefly described below. Apparently, the accompanying drawings in the following description show merely some embodiments of the present disclosure, and those of ordinary skill in the art can still derive other figures from these accompanying drawings without creative efforts.
FIG. 1 is a schematic structural diagram of an automatic monitoring system for solution-phase synthesis according to the present disclosure;
FIG. 2 is a schematic structural diagram of a new type reactor according to the present disclosure; and
FIG. 3 is a schematic structural diagram of a sampling module according to an embodiment of the present disclosure.

### Reference Numerals:

1 new type reactor, 1-1 bottle mouth, 1-2 sample intake, 1-3 air outlet, 1-4 sampling port, 1-5 bottle body, 1-51 reaction layer, 1-52 temperature cycle layer, 1-53 vacuum layer, 1-6 cyclic liquid outlet, 2 sampling module, 2-1 slide rail, 2-11 slide plate, 2-12 support frame, 2-2 turntable, 2-3 stainless steel needle, 2-4 first tube, 3 power module, 4 monitoring analysis module, 5 upper computer, 6 cleaning module, 6-1 first liquid container, 6-2 second liquid container, 6-3 solenoid valve.

### DETAILED DESCRIPTION OF THE EMBODIMENTS

The technical solutions of the embodiments of the present disclosure are clearly and completely described below with reference to the accompanying drawings. Apparently, the described embodiments are merely a part rather than all of the embodiments of the present disclosure. The invention is defined by the appended claims.

An objective of the present disclosure is to provide an automatic monitoring system for solution-phase synthesis, in order to implement automatic sampling, automatic monitoring and automatic analysis in a whole experimental monitoring process, thereby improving experimental monitoring efficiency, and reducing input labor cost of experimental operation.

To make the above objectives, features, and advantages of the present disclosure understood more clearly and apparently, the present disclosure will be further described in detail below with reference to the accompanying drawings and detail embodiments.

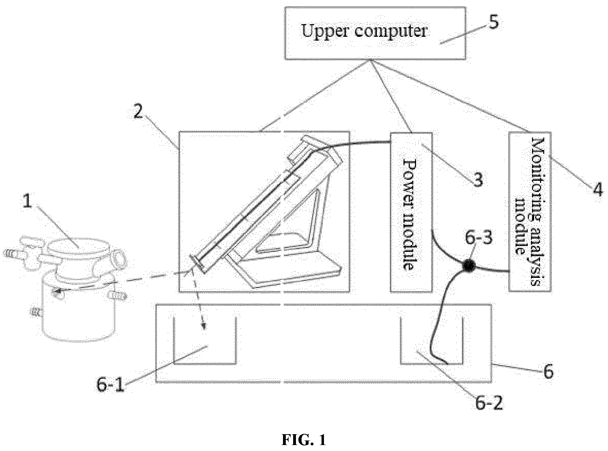

FIG. 1 is a schematic structural diagram of an automatic monitoring system for solution-phase synthesis according to the present disclosure. As shown in FIG. 1, the automatic monitoring system for solution-phase synthesis includes a new type reactor 1, a sampling module 2, a power module 3, a monitoring analysis module 4 and an upper computer 5.

The sampling module 2 is connected to a pipe of the power module 3. The power module 3 is connected to a pipe of the monitoring analysis module 4. The sampling module 2, the power module 3 and the monitoring analysis module 4 are all electrically connected to the upper computer 5.

The sampling module 2 is configured to suck a reaction solution contained in the new type reactor 1. The power module 3 is configured to provide suction force for the sampling module 2 according to a suction instruction from the upper computer 5, and inject a sucked reaction solution into the monitoring analysis module 4. The monitoring analysis module 4 is configured to generate a monitoring report according to the reaction solution, and then transmit the monitoring report to the upper computer 5. The upper computer 5 is configured to generate an analysis result according to the monitoring report.

Specific structures of the above modules according to the present disclosure will be described below.

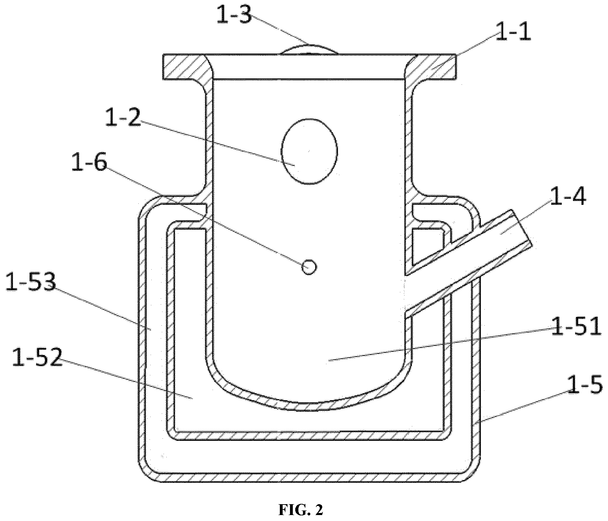

As shown in FIG. 2, the new type reactor 1 according to the present disclosure includes a bottle mouth 1-1, a bottle body 1-5, a sample intake 1-2, an air outlet 1-3, a sampling port 1-4, a cyclic liquid outlet 1-6 and a cyclic liquid inlet (not shown in the figure).

A set angle, preferably 60°, is formed between the sample intake 1-2 and the bottle mouth 1-1. The air outlet 1-3 and the sample intake 1-2 are symmetrically arranged with a center line of the bottle mouth 1-1 as a center.

The bottle body 1-5 includes a reaction layer 1-51, a temperature cycle layer 1-52 and a vacuum layer 1-53 in sequence from inside to outside. A bottom of the reaction layer 1-51 has an arc-shaped structure.

The sampling port 1-4 is communicated with the reaction layer 1-51.

The cyclic liquid outlet 1-6 and the cyclic liquid inlet are both communicated with the temperature cycle layer 1-52, and the cyclic liquid outlet 1-6 and the cyclic liquid inlet are diagonally arranged.

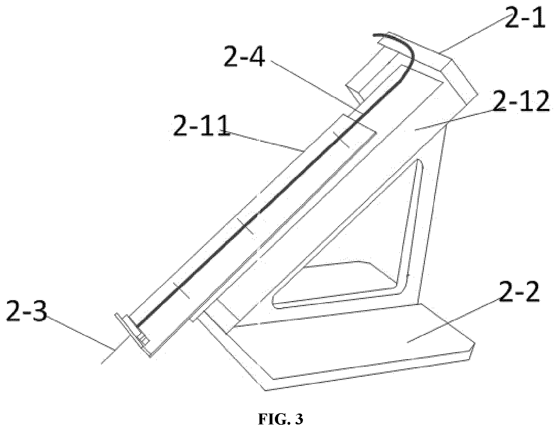

As shown in FIG. 3, the sampling module above includes a stainless steel needle 2-3, a slide rail 2-1 and a turntable 2-2.

The stainless steel needle 2-3 is connected to the power module 3 through a first tube 2-4. The first tube 2-4 is arranged on the slide rail 2-1, and a set angle, preferably 60°, is formed between the slide rail 2-1 and a horizontal line. The stainless steel needle 2-3 is fixedly arranged at one end of the slide rail 2-1, and the other end of the slide rail 2-1 is a free end. The slide rail 2-1 is configured to drive the stainless steel needle 2-3 to slide, and the stainless steel needle 2-3 is configured to be put into the novel reactor 1 to suck the reaction solution. The slide rail 2-1 is fixedly arranged on the turntable 2-2. The turntable 2-2 and the slide rail 2-1 are both electrically connected to the upper computer 5.

The slide rail 2-1 includes a slide plate 2-11 and a support frame 2-12. The slide plate 2-11 moves downwards along the support frame, so as to cause the stainless steel needle 2-3 to be put into the new type reactor 1 to suck the reaction solution. The support frame 2-12 is fixed on the turntable 2-2, and the turntable 2-2 can drive the whole slide rail 2-1 to rotate, such that the stainless steel needle can suck solutions in different containers. The slide rail 2-1 is cooperated and fixed in position with the new type reactor 1, and can be adjusted up and down. In order to fix the first tube 2-4 more firmly, the slide rail 2-1 can be provided with a slideway to fix the first tube 2-4. The turntable 2-2 (a machining module) drives the support slide rail 2-1 to rotate by a certain angle in different directions to different positions and stay.

The stainless steel needle 2-3 is preferably selected as a 9# needle in the present disclosure. A pierceable sealing rubber pad and an organic filter head are further arranged at a connection position between the stainless steel needle 2-3 and the first tube 2-4. A specification of the organic filter head may be selected from 0.22 µm, 0.45 µm and 0.8 µm. In use, a front end of the organic filter head is slightly blocked with absorbent cotton that is equivalent to a molecular sieve for preliminary filtering the reaction solution, and then a further filtering is performed through a filter membrane of the organic filter head to satisfy the requirement of an entering liquid chromatograph, thus implementing double filtration, and effectively avoiding blockage of the organic filter head.

The power module 3 above described includes a power pump, and the power pump is a syringe pump or a plunger pump. The power pump selected in the present disclosure not only has strong suction force, but also has a suck-back function. The suck-back function is provided in order to facilitate cleaning of the pipes of the whole automatic monitoring system for solution-phase synthesis.

The power pump is connected to the pipe of the sampling module 2 and the pipe of the monitoring analysis module 4 separately.

Preferably, the monitoring analysis module 4 is a high performance liquid chromatograph (HPLC). In order to implement a function of automatic monitoring, the present disclosure improves the liquid chromatograph as follows: a sample intake portion is disassembled and adjusted to be connected to an online sample intake six-way valve with a loop, and is controlled to be triggered to operate after receiving a short-circuit signal from the upper computer, and an operation method is selected and remains unchanged, and automatic flushing is performed after the operation method is finished. The HPLC gives a report in TXT format according to an extracted reaction solution sample for the upper computer to extract data and generate an analysis report.

Based on the above content, in order to facilitate cleaning of the whole system, the automatic monitoring system for solution-phase synthesis according to the present disclosure further includes a cleaning module 6.

The cleaning module 6 is connected to each of the sampling module 1 and the power module 3 via a pipeline.

The cleaning module includes a first liquid container 6-1, a second liquid container 6-2 and a solenoid valve 6-3.

With a driving of the turntable 2-2, the stainless steel needle 2-3 can suck a cleansing solution in the first liquid container. The second liquid container 6-2, the power module 3 and the monitoring analysis module 4 are each connected to a pipe of the solenoid valve. After the power module sucks a cleansing solution from the second liquid container 6-2 into the power pump through the suck-back function, the cleansing solution can be injected into the monitoring analysis module 4 for cleaning same. The cleansing solution used in the present disclosure is preferably an organic solvent.

The solenoid valve 6-3 is preferably a three-way solenoid valve, and is connected to the loop and waste liquid of HPLC. Different from the six-way valve in the HPLC, the solenoid valve is on-line separately and controlled by the upper computer.

Sliding of the slide rail 2-1 and rotation of the turntable 2-2 in the present disclosure are implemented using an existing servo motor, which is a conventional technology, and will be no longer repeated herein.

In the process of automatic sampling, monitoring, report and analysis on the reaction solution by using the automatic monitoring system for solution-phase synthesis according to the present disclosure, a software program is required. Specific advantages of the automatic monitoring system for solution-phase synthesis according to the present disclosure will be described in detail below in combination with a software program implanted in the upper computer. Since an emphasis of the present disclosure is directed to protect a hardware structure, merely theoretical description is made for software control part.

In the present disclosure, LabSolutions DB (database version) of Shimadzu is used to analyze a liquid phase, and a short-circuit connector for controlling trigger is reserved, and the liquid phase is controlled to operate automatically as required by combining the short-circuit signal from the upper computer to the PLC. After the operation is finished, a PDF-version report and a TXT report in ASCII of original data are automatically generated, and the upper computer extracts the TXT report.

An "on-line monitoring" interface is set in the upper computer, to extract the latest TXT report all the time. According to a naming method of the liquid phase, a naming of a newly generated TXT report is always located below that of a previous TXT report, which is conducive to extraction by the upper computer. After extracting a new TXT report, the upper computer can compare, judge and analyze the new TXT report according to an internal implanted logical relationship.

A reaction principle of one-pot by "pre-activation" is taken as an example. Whether an ordinary activation mode or a photo-mediated activation mode is used, "sampling monitoring" after activation of a donor is required to monitor whether the donor is fully activated or not, that is, activation monitoring, and then an activation result is fed back. If the donor is not fully activated, the donor continues to be activated or is repeatedly activated or continues to be photo-activated. If the donor is fully activated, an acceptor is added for reaction for "reaction time", and after a certain time and temperature, "sampling monitoring" is performed to determine whether the acceptor disappears completely or not, and meanwhile whether a new compound is generated, that is, reaction monitoring, and a reaction result is fed back. Whether the receptor still remains or not is the key to determine whether to proceed with a next cycle reaction. If the acceptor still remains, the reaction time continues to be prolonged or the reaction temperature is increased to proceed with the reaction. If the receptor has disappeared or is below a certain limit, a next cycle can be performed by default, and the activation reaction can continue under monitoring. If the receptor always remains above a certain limit, automatic synthesis can be ended.

To sum up, the online monitoring system designed by the present disclosure can perform automatic sampling, sample intake, triggering, pipe cleaning, report extraction as well as report comparison and determination, and the software control program implanted in the upper computer mainly includes two instructions of "sampling monitoring" and "monitoring results".

Each embodiment of the present specification is described in a progressive manner, each embodiment focuses on the difference from other embodiments, and reference can be made to each other for the same and similar parts between the embodiments.

Specific examples are used herein to illustrate principles and implementation modes of the present disclosure. The description of the embodiments above is merely intended to facilitate understanding of the method of the present disclosure and its core ideas. Besides, various modifications can be made by those of ordinary skill in the art to specific implementation modes and their applications in accordance with the ideas of the present disclosure. In conclusion, the content of the specification shall not be construed as a limitation to the present disclosure.

## Claims

1. An automatic monitoring system for solution-phase synthesis, comprising a new type reactor (1), a sampling module (2), a power module (3), a monitoring analysis module (4) and an upper computer (5), wherein the sampling module (2) is connected to a pipe of the power module (3), the power module (3) is connected to a pipe of the monitoring analysis module (4), and the sampling module (2), the power module (3) and the monitoring analysis module (4) are all electrically connected to the upper computer (5); and the sampling module (2) is configured to suck a reaction solution contained in the new type reactor (1), the power module (3) is configured to provide a suction force for the sampling module (2) according to a suction instruction from the upper computer (5), and inject the reaction solution sucked into the monitoring analysis module (4), the monitoring analysis module (4) is configured to generate a monitoring report according to the reaction solution, and then transmit the monitoring report to the upper computer (5), and the upper computer (5) is configured to generate an analysis result according to the monitoring report;
wherein the new type reactor (1) comprises: a bottle mouth (1-1), a bottle body (1-5), a sample intake (1-2), an air outlet (1-3), a sampling port (1-4), a cyclic liquid outlet (1-6) and a cyclic liquid inlet; a set angle is formed between the sample intake (1-2) and the bottle mouth (1-1), and the air outlet (1-3) and the sample intake (1-2) are symmetrically arranged with a center line of the bottle mouth (1-1) as a center;
the bottle body (1-5) sequentially comprises a reaction layer (1-51), a temperature cycle layer (1-52) and a vacuum layer (1-53) from inside to outside, and a bottom of the reaction layer (1-51) has an arc-shaped structure;
the sampling port (1-4) is communicated with the reaction layer (1-51); and the cyclic liquid outlet (1-6) and the cyclic liquid inlet are both communicated with the temperature cycle layer (1-52), and the cyclic liquid outlet (1-6) and the cyclic liquid inlet are diagonally arranged.

2. The automatic monitoring system for solution-phase synthesis according to claim 1, wherein the sampling module (2) comprises a stainless steel needle (2-3), a slide rail (2-1) and a turntable (2-2); wherein the stainless steel needle (2-3) is connected to the power module (3) through a first tube (2-4); the first tube (2-4) is arranged on the slide rail (2-1), and a set angle is formed between the slide rail (2-1) and a horizontal line; the stainless steel needle (2-3) is fixedly arranged at one end of the slide rail (2-1), and an other end of the slide rail (2-1) is a free end; the slide rail (2-1) is configured to drive the stainless steel needle (2-3) to slide, and the stainless steel needle (2-3) is configured to be put into the new type reactor (1) to suck the reaction solution therein; and the slide rail (2-1) is fixedly arranged on the turntable (2-2), and the turntable (2-2) and the slide rail (2-1) are both electrically connected to the upper computer (5).

3. The automatic monitoring system for solution-phase synthesis according to claim 1, wherein the power module (3) comprises a power pump, and the power pump is a syringe pump or a plunger pump; and the power pump is connected to each of a pipe of the sampling module (2) and the pipe of the monitoring analysis module (4).

4. The automatic monitoring system for solution-phase synthesis according to claim 1, wherein the monitoring analysis module (4) is a high performance liquid chromatograph.

5. The automatic monitoring system for solution-phase synthesis according to claim 2, further comprising a cleaning module (6); wherein the cleaning module (6) is connected to each of a pipe of the sampling module (1) and the pipe of the power module (3).

6. The automatic monitoring system for solution-phase synthesis according to claim 5, wherein the cleaning module (6) comprises a first liquid container (6-1), a second liquid container (6-2) and a solenoid valve (6-3); and the stainless steel needle (2-3) sucks a cleansing solution in the first liquid container (6-1), and the second liquid container (6-2), the power module (3) and the monitoring analysis module (4) are each connected to a pipe of the solenoid valve (6-3).

7. The automatic monitoring system for solution-phase synthesis according to claim 6, wherein the cleansing solution is an organic solvent.

## Patentansprüche

1. Automatisches Überwachungssystem für die Flüssigphasensynthese, umfassend einen neuartigen Reaktor (1), ein Probennahmemodul (2), ein Leistungsmodul (3), ein Überwachungsanalysemodul (4) und einen übergeordneten Computer (5), wobei das Probennahmemodul (2) mit einer Leitung des Leistungsmoduls (3) verbunden ist, das Leistungsmodul (3) mit einer Leitung des Überwachungsanalysemoduls (4) verbunden ist, und das Probennahmemodul (2), das Leistungsmodul (3) und das Überwachungsanalysemodul (4) alle elektrisch mit dem übergeordneten Computer (5) verbunden sind; und das Probennahmemodul (2) konfiguriert ist, um eine in dem neuartigen Reaktor (1) enthaltene Reaktionslösung anzusaugen, das Leistungsmodul (3) konfiguriert ist, um eine Saugkraft für das Probennahmemodul (2) gemäß einer Sauganweisung von dem übergeordneten Computer (5) bereitzustellen und die angesaugte Reaktionslösung in das Überwachungsanalysemodul (4) zu injizieren, das Überwachungsanalysemodul (4) konfiguriert ist, um einen Überwachungsbericht gemäß der Reaktionslösung zu erzeugen und dann den Überwachungsbericht an den übergeordneten Computer (5) zu übertragen, und der übergeordnete Computer (5) konfiguriert ist, um ein Analyseergebnis gemäß dem Überwachungsbericht zu erzeugen;
wobei der neuartige Reaktor (1) umfasst: eine Flaschenöffnung (1-1), einen Flaschenkörper (1-5), einen Probeneinlass (1-2), einen Luftauslass (1-3), eine Probennahmeöffnung (1-4), einen Kreislaufflüssigkeitsauslass (1-6) und einen Kreislaufflüssigkeitseinlass; wobei ein festgelegter Winkel zwischen dem Probeneinlass (1-2) und der Flaschenöffnung (1-1) gebildet ist und der Luftauslass (1-3) und der Probeneinlass (1-2) symmetrisch mit einer Mittellinie der Flaschenöffnung (1-1) als Zentrum angeordnet sind;
der Flaschenkörper (1-5) sequentiell eine Reaktionsschicht (1-51), eine Temperaturwechselschicht (1-52) und eine Vakuumschicht (1-53) von innen nach außen umfasst, und ein Boden der Reaktionsschicht (1-51) eine bogenförmige Struktur aufweist;
die Probennahmeöffnung (1-4) mit der Reaktionsschicht (1-51) in Verbindung steht; und sowohl der Kreislaufflüssigkeitsauslass (1-6) als auch der Kreislaufflüssigkeitseinlass mit der Temperaturwechselschicht (1-52) in Verbindung stehen, und der Kreislaufflüssigkeitsauslass (1-6) und der Kreislaufflüssigkeitseinlass diagonal angeordnet sind.

2. Automatische Überwachungssystem für die Flüssigphasensynthese nach Anspruch 1, wobei das Probennahmemodul (2) eine Edelstahlnadel (2-3), eine Gleitschiene (2-1) und einen Drehtisch (2-2) umfasst; wobei die Edelstahlnadel (2-3) über einen ersten Schlauch (2-4) mit dem Leistungsmodul (3) verbunden ist; der erste Schlauch (2-4) auf der Gleitschiene (2-1) angeordnet ist und ein festgelegter Winkel zwischen der Gleitschiene (2-1) und einer horizontalen Linie gebildet ist; die Edelstahlnadel (2-3) fest an einem Ende der Gleitschiene (2-1) angeordnet ist und ein anderes Ende der Gleitschiene (2-1) ein freies Ende ist; die Gleitschiene (2-1) konfiguriert ist, um die Edelstahlnadel (2-3) zum Gleiten anzutreiben, und die Edelstahlnadel (2-3) konfiguriert ist, um in den neuartigen Reaktor (1) eingeführt zu werden, um die Reaktionslösung darin anzusaugen; und die Gleitschiene (2-1) fest auf dem Drehtisch (2-2) angeordnet ist, und sowohl der Drehtisch (2-2) als auch die Gleitschiene (2-1) elektrisch mit dem übergeordneten Computer (5) verbunden sind.

3. Automatische Überwachungssystem für die Flüssigphasensynthese nach Anspruch 1, wobei das Leistungsmodul (3) eine Leistungspumpe umfasst und die Leistungspumpe eine Spritzenpumpe oder eine Kolbenpumpe ist; und die Leistungspumpe mit jeder einer Leitung des Probennahmemoduls (2) und der Leitung des Überwachungsanalysemoduls (4) verbunden ist.

4. Automatische Überwachungssystem für die Flüssigphasensynthese nach Anspruch 1, wobei das Überwachungsanalysemodul (4) ein Hochleistungsflüssigkeitschromatograph ist.

5. Automatische Überwachungssystem für die Flüssigphasensynthese nach Anspruch 2, ferner umfassend ein Reinigungsmodul (6); wobei das Reinigungsmodul (6) mit jeder einer Leitung des Probennahmemoduls (1) und der Leitung des Leistungsmoduls (3) verbunden ist.

6. Automatische Überwachungssystem für die Flüssigphasensynthese nach Anspruch 5, wobei das Reinigungsmodul (6) einen ersten Flüssigkeitsbehälter (6-1), einen zweiten Flüssigkeitsbehälter (6-2) und ein Magnetventil (6-3) umfasst; und die Edelstahlnadel (2-3) eine Reinigungslösung in dem ersten Flüssigkeitsbehälter (6-1) ansaugt, und der zweite Flüssigkeitsbehälter (6-2), das Leistungsmodul (3) und das Überwachungsanalysemodul (4) jeweils mit einer Leitung des Magnetventils (6-3) verbunden sind.

7. Automatische Überwachungssystem für die Flüssigphasensynthese nach Anspruch 6, wobei die Reinigungslösung ein organisches Lösungsmittel ist.

## Revendications

1. Système de surveillance automatique pour synthèse en phase de solution, comprenant un réacteur de type nouveau (1), un module d'échantillonnage (2), un module d'alimentation (3), un module d'analyse de surveillance (4) et un ordinateur supérieur (5), dans lequel le module d'échantillonnage (2) est connecté à une conduite du module d'alimentation (3), le module d'alimentation (3) est connecté à une conduite du module d'analyse de surveillance (4), et le module d'échantillonnage (2), le module d'alimentation (3) et le module d'analyse de surveillance (4) sont tous connectés électriquement à l'ordinateur supérieur (5) ; et le module d'échantillonnage (2) est configuré pour aspirer une solution réactionnelle contenue dans le réacteur de type nouveau (1), le module d'alimentation (3) est configuré pour fournir une force d'aspiration pour le module d'échantillonnage (2) selon une instruction d'aspiration provenant de l'ordinateur supérieur (5), et injecter la solution réactionnelle aspirée dans le module d'analyse de surveillance (4), le module d'analyse de surveillance (4) est configuré pour générer un rapport de surveillance selon la solution réactionnelle, puis transmettre le rapport de surveillance à l'ordinateur supérieur (5), et l'ordinateur supérieur (5) est configuré pour générer un résultat d'analyse selon le rapport de surveillance ; dans lequel le réacteur de type nouveau (1) comprend : une ouverture de bouteille (1-1), un corps de bouteille (1-5), une entrée d'échantillon (1-2), une sortie d'air (1-3), un port d'échantillonnage (1-4), une sortie de liquide cyclique (1-6) et une entrée de liquide cyclique ; un angle fixe est formé entre l'entrée d'échantillon (1-2) et l'ouverture de bouteille (1-1), et la sortie d'air (1-3) et l'entrée d'échantillon (1-2) sont disposées symétriquement avec une ligne centrale de l'ouverture de bouteille (1-1) pour centre ;
le corps de bouteille (1-5) comprend séquentiellement une couche réactionnelle (1-51), une couche de cycle de température (1-52) et une couche de vide (1-53) de l'intérieur vers l'extérieur, et un fond de la couche réactionnelle (1-51) a une structure en forme d'arc ;
le port d'échantillonnage (1-4) est en communication avec la couche réactionnelle (1-51) ; et la sortie de liquide cyclique (1-6) et l'entrée de liquide cyclique sont toutes deux en communication avec la couche de cycle de température (1-52), et la sortie de liquide cyclique (1-6) et l'entrée de liquide cyclique sont disposées en diagonale.

2. Système de surveillance automatique pour synthèse en phase de solution selon la revendication 1, dans lequel le module d'échantillonnage (2) comprend une aiguille en acier inoxydable (2-3), un rail coulissant (2-1) et un plateau tournant (2-2) ; dans lequel l'aiguille en acier inoxydable (2-3) est connectée au module d'alimentation (3) par un premier tube (2-4) ; le premier tube (2-4) est disposé sur le rail coulissant (2-1), et un angle fixe est formé entre le rail coulissant (2-1) et une ligne horizontale ; l'aiguille en acier inoxydable (2-3) est disposée de manière fixe sur une extrémité du rail coulissant (2-1), et une autre extrémité du rail coulissant (2-1) est une extrémité libre ; le rail coulissant (2-1) est configuré pour entraîner l'aiguille en acier inoxydable (2-3) à coulisser, et l'aiguille en acier inoxydable (2-3) est configurée pour être introduite dans le réacteur de type nouveau (1) pour y aspirer la solution réactionnelle ; et le rail coulissant (2-1) est disposé de manière fixe sur le plateau tournant (2-2), et le plateau tournant (2-2) et le rail coulissant (2-1) sont tous deux connectés électriquement à l'ordinateur supérieur (5).

3. Système de surveillance automatique pour synthèse en phase de solution selon la revendication 1, dans lequel le module d'alimentation (3) comprend une pompe d'alimentation, et la pompe d'alimentation est une pompe à seringue ou une pompe à piston ; et la pompe d'alimentation est connectée à chacune d'une conduite du module d'échantillonnage (2) et à la conduite du module d'analyse de surveillance (4).

4. Système de surveillance automatique pour synthèse en phase de solution selon la revendication 1, dans lequel le module d'analyse de surveillance (4) est un chromatographe liquide haute performance.

5. Système de surveillance automatique pour synthèse en phase de solution selon la revendication 2, comprenant également un module de nettoyage (6) ; dans lequel le module de nettoyage (6) est connecté à chacune d'une conduite du module d'échantillonnage (1) et à la conduite du module d'alimentation (3) .

6. Système de surveillance automatique pour synthèse en phase de solution selon la revendication 5, dans lequel le module de nettoyage (6) comprend un premier récipient à liquide (6-1), un second récipient à liquide (6-2) et une électrovanne (6-3) ; et l'aiguille en acier inoxydable (2-3) aspire une solution de nettoyage dans le premier récipient à liquide (6-1), et le second récipient à liquide (6-2), le module d'alimentation (3) et le module d'analyse de surveillance (4) sont chacun connectés à une conduite de l'électrovanne (6-3).

7. Système de surveillance automatique pour synthèse en phase de solution selon la revendication 6, dans lequel la solution de nettoyage est un solvant organique.
